# FASCICULE DE BREVET EUROPEEN

(11) **EP 0 762 426 B1**
(45) Date de publication et mention de la délivrance du brevet: **26.09.2001**
(21) Numéro de dépôt: 96401369.2
(22) Date de dépôt: 21.06.1996
(51) Int. Cl.: G11B 33/12

(54) **Dispositif de montage d'unité à disques pour système multidisques**
Aufbauanordnung einer Platteneinheit für Mehrfachplattensystem
Supporting device for a disc unit of a multi-disc system

(30) Priorité: 08.09.1995 FR 9510555
(43) Date de publication de la demande: 12.03.1997
(73) Titulaire: BULL S.A., 78430 Louveciennes (FR)
(72) Inventeur: Carteau, Daniel, 78180 Montigny le Bretonneux (FR); Michaud, Gilbert, 78580 Maule (FR); Gargemel, Laurent, 49240 Avrille (FR)

(56) Documents cités:
- EP-A- 0 621 600
- US-A- 5 333 098
- US-A- 5 375 113

## Description

La présente invention concerne un dispositif d'habillage d'unité à disques pour sous - système multidisques. Elle est plus particulièrement applicable à une structure physique de sous - système comportant une pluralité d'unités à disques amovibles disposées à l'intérieur d'une pluralité de plaques parallèles les unes aux autres et disposées à l'intérieur d'un compartiment en forme de tiroir, ce dernier pouvant être lui - même placé dans une armoire pouvant en contenir plusieurs.

On sait que les grands systèmes informatiques modernes traitent des volumes de données toujours plus importants, ce qui nécessite l'utilisation d'un nombre encore plus grand de mémoires de masse où elles doivent être stockées avant d'être traitées par les processeurs centraux de ceux - ci.

La gestion de tels systèmes dans leur ensemble par leur seule unité centrale étant trop lourde, on est conduit à décentraliser l'activité de celle - ci au niveau de plusieurs sous - systèmes qui gèrent chacun une partie des éléments du système en particulier les mémoires à disques.

On réalise ainsi des sous - systèmes de mémoire de masse comportant par exemple une pluralité d'unités à disques, qui gèrent en lieu et place de l'unité centrale le transfert des données de celle - ci vers les dites unités ainsi que l'écriture et la lecture des informations à l'intérieur de celles - ci.

La structure physique d'un tel sous - système est par exemple décrite dans le brevet français FR-A-2 704 350 dont la demanderesse est propriétaire. Ses éléments essentiels, nécessaires à la compréhension de l'invention, en sont rappelés aux figures 1 et 2. Ce document reflète le préambule de la revendication 1.

Un autre exemple d'unité à disques est décrit dans le brevet US-A-5 333 098.

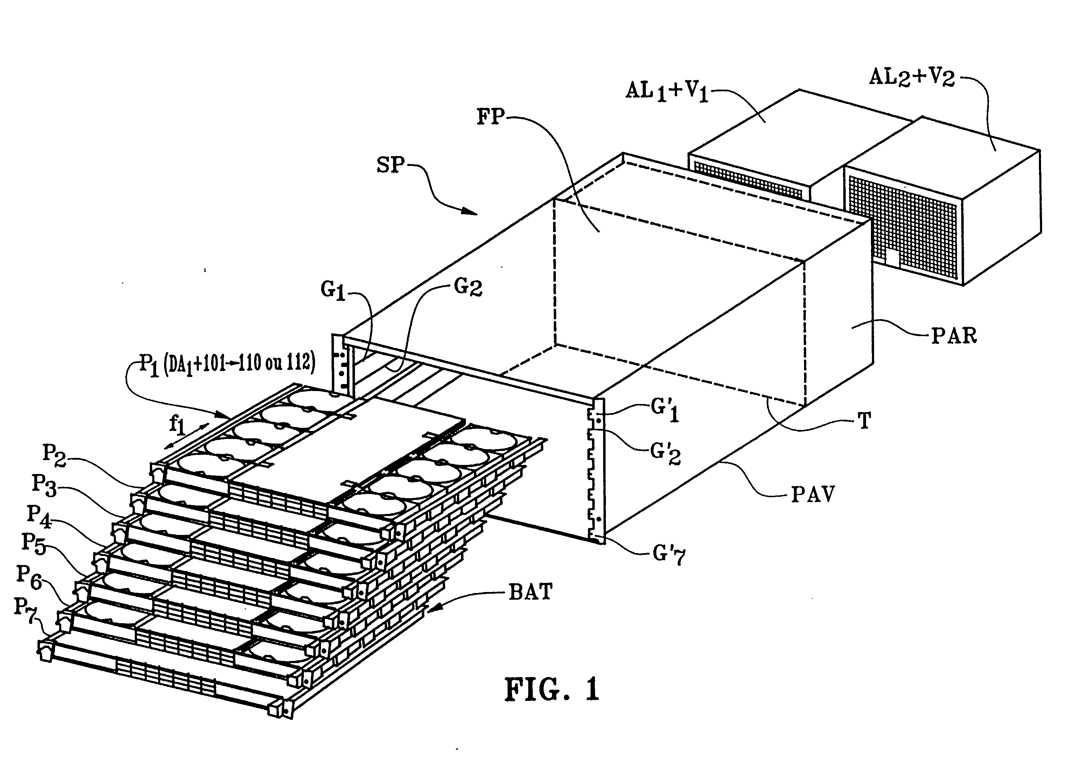

On considère la figure 1.

La structure physique dénommée SP comprend un tiroir T de forme parallélépipédique comprenant, sur chacune de ses parois latérales internes, une pluralité de couples de glissières longitudinales parallèles entre elles et disposées les unes aux dessus des autres, à savoir G1-G'1, G2-G'2, ....., G7-G'7.

La structure SP comprend par ailleurs une pluralité de plaques P1, P2,..., P7 qui sont parallèles entre elles, relativement plates, de forme parallélépipédique rectangulaire, et de même direction longitudinale que celle du tiroir T. Elles peuvent coulisser chacune respectivement à l'intérieur de T sur les glissières G1-G'1 à G7-G'7, d'avant en arrière ou d'arrière en avant, longitudinalement, selon le sens de la flèche f1 parallèle à la longueur du tiroir T.

Les plaques P1 à P7 s'introduisent par la partie avant du tiroir T à savoir, TAV, alors que la partie arrière PAR se compose de deux alimentations AL1 et AL2 identiques, munies chacune respectivement d'un dispositif de ventilation V1, V2, et disposées côte à côte.

Chacune des plaques P1 à P5 comporte plusieurs unités à disques qui, à la figure 1, sont au nombre de 10. La plaque P6 porte, par exemple, le processeur central FCP qui gère l'ensemble du sous - système périphérique comportant les unités à disques des plaques P1 à P5. La plaque P7 porte un ensemble de batteries de secours BAT.

Les parties avant PAV et arrière PAR sont séparées par un fond de panier FP qui porte un certain nombre de connexions électriques.

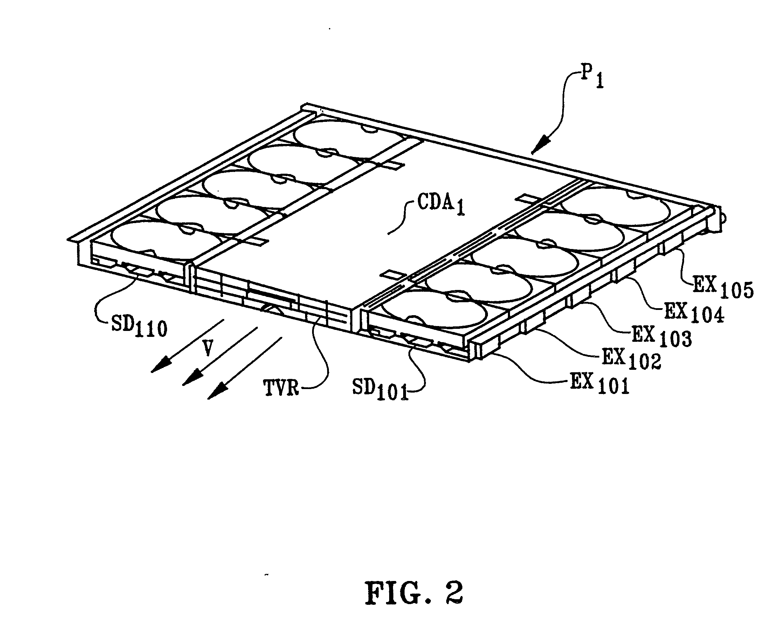

On considère la figure 2 qui montre vue de l'avant un exemple de réalisation de l'une des plaques P1 à P5, à savoir P1. P1 comprend deux rangées parallèles de 5 mémoires à disques encore appelées "unités à disques" ou plus commodément "disques", disposées côte à côte, à savoir respectivement une première rangée de disques 101 à 105 et une seconde de disques 106 à 110. Ces disques ont leur axe longitudinal perpendiculaire à l'axe longitudinal de P1.

La plaque P1 comprend une partie centrale portant une carte électronique CDA1 portant un dispositif adaptateur DA1. Les deux rangées 101 à 105, 106 à 110 sont disposées de part et d'autre de cette partie centrale CDA1. Les disques de la première rangée sont tous connectés sur un même côté de la plaque CDA1. De même, les disques de la seconde rangée sont connectés sur CDA1 sur le même côté opposé à celui sur lequel sont connectés les disques de la première rangée.
Sur les bords longitudinaux de P1, on trouve une série de leviers d'extraction permettant d'insérer ou d'extraire les disques de la rangée à laquelle ils sont associés, de les verrouiller une fois mis en place sur P1 ce qui facilite la connexion des disques sur CDA1. On peut voir sur la partie droite de la figure 2 les leviers d'extraction EX101 à EX105 de bas en haut de la figure.

Ces derniers sont associés respectivement aux disques 101 à 105, alors que EX106 à EX110 sont respectivement associés aux disques 106 à 110. A la figure 2, on peut voir au centre de la plaque, respectivement sur le bord avant et sur le bord arrière de celle-ci des séries TVA et TVR de trous de ventilation, de forme rectangulaire permettant le passage de l'air de ventilation V dans le sens indiqué par les flèches parallèles à la longueur de la plaque P1. L'air de ventilation V aspiré par les ventilateurs V1 et V2 se dirige donc d'avant en arrière dans le sens de la longueur des plaques. Il passe au dessus et en dessous des disques 101 à 105, 106 à 110.

### LE PROBLEME POSE

La présente invention concerne un dispositif de montage d'unité à disques telle que 101 à 110, aisément manipulable par l'utilisateur du sous-système multidisques qui le contient ou par les services de maintenance et qui peut être inséré ou extrait dans ou à partir du tiroir T, de coût minimum et de fiabilité maximum.
Ce dispositif de montage supporte une unité à disques de trois pouces et demi normalisée, un connecteur de type SCSI, (les liaisons de type SCSI entre disques étant normalisées) un dispositif de prise en compte de la ventilation du tiroir, et est alimenté en tension par une alimentation unique , ici de + 24 V. II comporte des indications visuelles donnant à l'utilisateur des renseignements sur son fonctionnement, et assure les protections mécaniques et électriques de tous ses propres composants électroniques.

Le gros problème est qu'une ventilation non efficace d'un disque influe sur sa durée de vie.

Selon l'invention, le dispositif de montage est défini par la revendication 1.

D'autres caractéristiques et avantages de la présente invention apparaîtront dans la description suivante donnée à titre d'exemple non limitatif et en se référant aux dessins annexés. Sur ces dessins :
- La figure 1 rappelle ce qu'est la structure physique d'un sous - système périphérique de mémoire de masse dans le cadre duquel se situe l'invention,
- La figure 2 rappelle la constitution physique d'un tiroir d'une telle structure, à l'intérieur duquel s'insère l'unité à disques selon l'invention,
- La figure 3 est une vue de trois - quarts en perspective sous forme éclatée montrant une unité à disques et le dispositif de montage correspondant selon l'invention,
- La figure 4 montre de façon simplifiée le schéma électrique d'ensemble des deux cartes de circuit imprimé du dispositif de montage selon l'invention.

### DESCRIPTION D'UN EXEMPLE DE REALISATION DE L'INVENTION

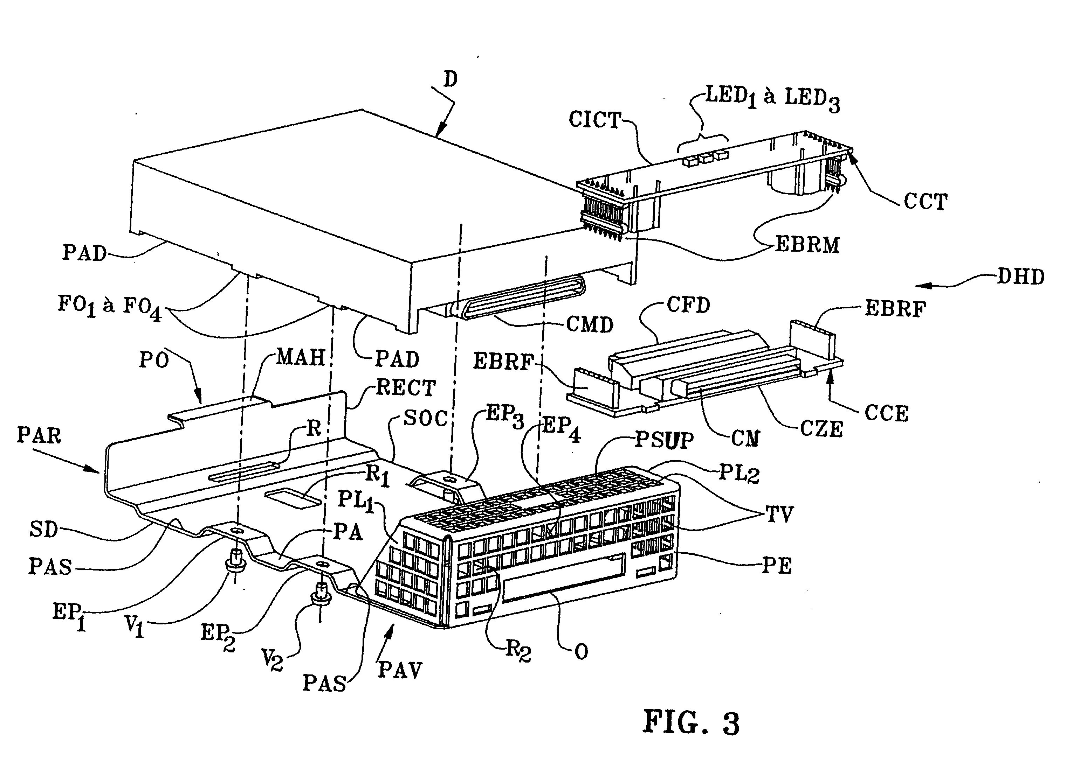

On considère la figure 3 qui montre, d'une part, une unité à disques D de forme sensiblement parallélépipédique avec son connecteur mâle CMD disposé dans la partie inférieure de son extrémité droite sur cette figure, et d'autre part son dispositif de montage DHD. Dans la suite du texte, on désignera pour simplifier l'unité à disques D sous l'appellation de "disque D".

### A) STRUCTURE GENERALE DU DISPOSITIF DE MONTAGE :

Les différents éléments constitutifs essentiels de DHD qui sont au nombre de six sont les suivants :
**a)** Le support métallique SD du disque D,
**b)** L'ouverture O à l'intérieur de laquelle vient s'insérer le connecteur externe du disque D, à savoir CN,
**c)** Les moyens d'insertion, d'extraction et de verrouillage qui permettent de placer (ou de retirer) DHD à l'intérieur de (ou de) l'emplacement de tiroir T choisi (se référer également à la figure 2), constitués de la poignée de préhension PO et de la rainure R, ainsi que des encoches R1 et R2,
**d)** Les moyens de prise en compte de la ventilation MPV du disque D,
**e)** Une première carte CCE d'interconnexion de D avec son environnement extérieur (par exemple une carte d'adaptation telle que CDA1 à la figure 2) par l'intermédiaire du connecteur CN,
**f)** une seconde carte CCT de conversion de tension continue reliée à la première.

La première et la seconde carte sont disposées à l'extrémité ou partie avant PAV du dispositif DHD contenant l'ouverture O et le connecteur CN.

Le support SD comprend un socle S de forme sensiblement rectangulaire, une partie arrière PAR, disposée à son extrémité gauche à la figure 3, qui est essentiellement constituée par la poignée de préhension PO qui permet de manipuler manuellement avec aisance l'ensemble formé par le disque D et DHD, lorsqu'il s'agit d'introduire (ou de retirer) cet ensemble à l'intérieur du tiroir T, et une partie avant PAV creuse vers l'intérieur de S et de forme sensiblement parallélépipédique disposée à son extrémité droite à la figure 3.

La partie avant PAVD de DHD a sa partie inférieure constituée par la partie avant du socle S, deux parois latérales PL1 et PL2 (le côté latéral de chacune de celles - ci disposé vers l'intérieur de S est incliné par rapport à ce socle alors que l'autre disposé à l'avant vers l'extérieur lui est perpendiculaire), de forme trapézoïdale rectangulaire , perpendiculaires à S et parallèles à la longueur de ce dernier, une partie supérieure PSUP parallèle à sa partie inférieure, et sa partie la plus extérieure PE qui contient l'ouverture O, perpendiculaire au socle et parallèle à sa largeur. Ainsi qu'on peut le voir à la figure 3, O est de forme rectangulaire avec une grande dimension parallèle à la largeur de S et est disposée dans la partie inférieure de PAVD au voisinage immédiat de S.

Le disque D est muni de quatre pieds FO1 à FO4 disposés sur sa partie inférieure, deux seulement de ceux - ci étant visibles à la figure 3. Quant au support S, il comprend dans sa partie centrale 4 épaulements EP1 à EP4 disposés sur chacun de ses deux bords longitudinaux (avec bien entendu deux épaulements sur chacun d'entre eux). Chaque épaulement EP1 à EP4 est associé respectivement à un pied FO1 à FO4 du disque D. Il comprend en son centre un trou par lequel on peut passer une vis V1 à V4 qui vient s'insérer dans le pied correspondant, ce qui permet la fixation de D sur S, en constituant ainsi un ensemble mécanique unique (D+DHD).

La poignée de préhension PO de cet ensemble est formée d'une paroi rectangulaire RECT perpendiculaire à S et d'une plaquette perpendiculaire à cette dernière et donc parallèle à S, mais de longueur inférieure à la largeur de ce dernier, cette plaquette étant destinée à être saisie par les extrémités des doigts de celui qui cherche à manipuler l'ensemble (D + DHD).

La rainure R dont l'axe longitudinal est perpendiculaire à la longueur de S et qui est disposée vers l'arrière de celui - ci, au voisinage de la paroi RECT, est destinée à coopérer avec des leviers d'extraction tels que EX101 à EX105 à la figure 2, d'une manière analogue à celle indiquée dans la demande de brevet précitée.

Les deux encoches R1 et R2, sont de forme rectangulaire et leur axe longitudinal se confond avec celui de S. Elles sont disposées respectivement vers l'arrière et vers l'avant de celui - ci, R2 étant masqué à la figure 3 par les trous de ventilation TV. Ces encoches sont destinées à coopérer avec des crochets appartenant au socle du tiroir T, qui passent à travers elles dès que DHD est inséré dans le tiroir du fait de la coopération entre le levier d'extraction et R (voir ci - dessus). Ces crochets maintiennent alors fermement l'ensemble (D + DHD) à l'intérieur du tiroir T.

Ces moyens sont formés par l'association des espaces de ventilation PAS et PAD, d'une part et par les trous de ventilation TV d'autre part, lesquels sont précisés ci - dessous.

On voit à la figure 3, que, une fois D fixé sur S, il existe, entre la surface de S et la surface inférieure du disque D, des espaces PA disposés de part et d'autre des pieds FO1 à FO4 et des épaulements EP1 à EP4 qui peuvent laisser passer de l'air de ventilation sous D, transversalement à celui - ci (voir également la figure 2). Ces espaces peuvent se décomposer entre des espaces PAD ménagés sous le disque lui - même et dont on peut dire qu'ils lui appartiennent et des espaces PAS ménagés au - dessus de S et dont on peut dire également qu'ils lui appartiennent.

Les moyens TV sont formés par des rangées, parallèles entre elles, de trous rectangulaires pratiqués dans chacune des parois PL1 et PL2, PE et PSUP.

De la sorte, on assure une ventilation efficace du disque D à l'intérieur du tiroir T, assurant ainsi, de fait, une durée de vie plus importante de celui - ci.

La partie avant PAVD constitue ainsi une sorte de boîte ajourée à l'intérieur de laquelle viennent se loger les deux cartes CCE et CCT, le connecteur CN passant à l'intérieur de l'ouverture O.

La première carte d'interconnexion CCE comporte le circuit imprimé d'interconnexion CII, le connecteur externe CN, le connecteur femelle CFD, et l'ensemble de broches femelles EBRF.

Le circuit CII sert de socle mécanique de base à la carte CCE et a une forme quasi rectangulaire. Les connecteurs CN et CFD sont fixés respectivement sur ce dernier du côté de son grand côté avant (le plus à droite à la figure 3) et du côté de son grand côté arrière (le plus à gauche à la figure 3) dans sa partie centrale. On peut dire d'une certaine façon que CN et CFD sont disposés dos - à -dos (mais ne sont pas en fait en contact mécanique l'un avec l'autre)

CN et CFD sont connectés chacun électriquement au circuit CII.

L'ensemble de broches EBRF est formé de demi - ensembles identiques de huit broches femelles de forme rectangulaire disposés chacun le long des petits côtés de CII et qui entourent ainsi les deux connecteurs CN et CFD.

Le connecteur CN est de type normalisé femelle 80 points alors que le connecteur CFD (ainsi que son homologue mâle CMD) est de type dit SCA également normalisé.

La seconde carte de conversion de tension CCT comporte, le circuit imprimé de conversion de tension CICT, l'ensemble de broches mâles EBRM, et l'ensemble de trois diodes lumineuses d'affichage de type Led, à savoir les trois diodes LED1 à LED3. La première indique si le disque est alimenté en tension, la seconde si le disque est en activité et la troisième s'il y a un défaut dans le fonctionnement du disque D.

Le circuit CII sert de socle mécanique de base à la carte CCT et a une forme quasi rectangulaire. Il porte dans sa partie supérieure (en haut de la figure 3) les trois diodes LED1 à LED3.

L'ensemble de broches EBRM est formé de demi - ensembles identiques de huit broches mâles, de forme rectangulaire, disposés chacun le long des petits côtés de CICT. Ils sont donc disposés sur CICT de la même manière que les deux demi - ensembles EBRF sur CII. Il est évident que les broches mâles de EBRM sont destinées à être insérées dans les broches femelles correspondantes de EBRF.

Pour réaliser l'ensemble mécanique (D+DHD), on rentre CCT dans CCE en insérant par pression l'ensemble de broches mâles EBRM dans l'ensemble de broches femelles EBRF. Ce sous - ensemble ainsi constitué est alors connecté par l'intermédiaire de CFD à CMD et par suite à D. Le sous - ensemble (CCE+CCT+D) est alors rentré dans S, les deux cartes (CCT+CCE) s'insérant à l'intérieur de la partie avant PAV. On visse ensuite D sur S par les quatre vis V1 à V4.

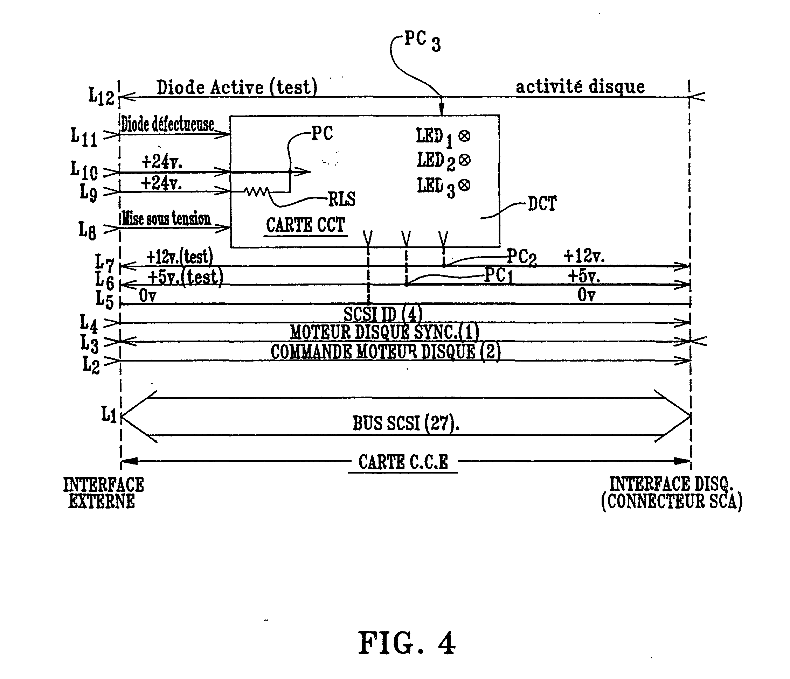

Les principales fonctionnalités électriques des cartes CCE et CCT sont illustrées par la figure 4, celles de la première étant montrées dans le bas de la figure, celles de la seconde l'étant en haut. La ligne verticale en traits interrompus située sur la partie gauche de la figure 4 symbolise l'interface externe de l'ensemble (D+DHD), représentée physiquement par le connecteur CN, alors que celle située sur la partie droite symbolise l'interface disque représentée physiquement par le connecteur CMD.

Chacune des lignes horizontales de la figure 4 symbolise les liaisons électriques réalisées sur chacune des deux cartes et la signification de ces dernières est indiquée au - dessus de ces lignes. De bas en haut de la figure 4, on recense donc 12 liaisons L1 à L12. Lorsque celles - ci comprennent plusieurs conducteurs électriques, ceci est indiqué par un chiffre qui est entre parenthèses. Il est clair que ces liaisons sont celles qui sont réalisées physiquement sur chacun des circuits imprimés CII et CICT.

La carte CCE comporte les lignes L1 à L4, la carte CCT les lignes L6 à L12 , la ligne L5 commune aux deux cartes étant celle de la masse (potentiel 0 V).

On considère les lignes L1 à L4 de CCE.

La ligne L1 est formée par 27 conducteurs du bus normalisé SCSI de type dit "Fast/Wide single ended SCSI".

La ligne L2 composée de deux conducteurs est celle destinée à la commande du moteur d'entraînement des disques magnétiques de l'unité à disques D.

La ligne L3 est monofilaire et est destinée à la synchronisation du dit moteur.

La ligne L4 composée de quatre conducteurs est celle des quatre conducteurs d'identification ID du bus normalisé SCSI. On voit donc que, sur CCE, ce bus est en fait constitué des lignes L1 et L4.

On considère les lignes L6 à L12 de CCT, étant entendu que la carte CCT comprend un dispositif de conversion de tension continue, à savoir DCT, . Ce dernier reçoit par l'intermédiaire de l'interface externe (connecteur CN) et des lignes monofilaires L9 et L10 une tension continue de +24 V. On notera que la ligne L9 est reliée à L10 par l'intermédiaire de la résistance RLS qui permet de limiter les surtensions, lors de la mise en fonctionnement des cartes CCE, CCT et de D. Le point commun entre L9 et L10 est disposé sur la carte CCT.

Le dispositif DCT transforme la tension continue d'entrée de +24 V en deux tensions continues de +5 V et +12 V qui sont utilisées de manière normalisées sur les disques tels que D.

Le dispositif DCT est donc connecté aux deux lignes monofilaires L6 et L7 par l'intermédiaire des points de connexion PC1 et PC2 et donc de ce fait relié aux deux connecteurs CFD et CMD et par suite au disque D. Il est à noter que la partie des lignes L6 et L7 comprise entre PC1 et PC2, d'une part et le connecteur CN d'autre part, n'est utilisée que lors de tests de D où le dispositif de conversion fonctionne, et où l'on cherche à vérifier si les tensions d'alimentation continue de D sont bien égales à +5 V ou +12 V.

La ligne monofilaire L8 permet de relier le connecteur CN à la carte CCT et commande la mise sous tension et donc le fonctionnement ou non de la carte CCT et donc du disque D.

La ligne monofilaire L11 est destinée à alimenter la diode LED3.

La ligne monofilaire L12, destinée à alimenter la diode LED2, est connectée à la carte CCT par l'intermédiaire du point de connexion PC3. La partie de la ligne L12 située entre PC3 et le connecteur CN est utilisée pour vérifier en cas de test si la diode LED3 fonctionne correctement ainsi que le signal de commande qui l'alimente.

Il convient de préciser que , lorsque l'on connecte le disque D à la carte CDA1, les plots de connexion du connecteur CN sont disposés de telle sorte que ce soit la ligne de masse L5 qui soit connectée la première dans le temps. En fait , les connexions respectives de la ligne L5 et des autres lignes sont décalées dans l'espace.

Les principaux avantages du dispositif de montage selon l'invention sont les suivants :
- extrême simplicité et donc coût réduit compte tenu des fonctionnalités additionnelles apportées par rapport à un disque tel que D du commerce,
- grande fiabilité de l'ensemble due au fait qu'il n'y a aucun câble et la présence des moyens de ventilation MPV,
- réduction de la distance entre le disque D et le bus SCSI (sur CDA1),
- accepte tous les disques du commerce de type 3 "1/2,
- aucun câblage spécifique,
- simplicité et rapidité de montage en fabrication : uniquement les 4 vis V1 à V4,
- support de connexion en fonctionnement : résistance RLS et décalage spatial des contacts de CN,
- mise en route ou arrêt du disque par la ligne L8,
- autonomie de l'ensemble : convertisseurs de tension intégrés dans le dispositif de montage, affichage par LED1 à LED3 d'indications sur le fonctionnement du disque D, pas d'interférence d'un dispositif de montage sur le voisin,
- possibilité, à partir de CDA1 (figure 2), de vérifier la présence ou l'absence d'un disque tel que D à l'intérieur de T et également de générer une fonction de Remise à Zéro (RAZ) du bus SCSI pendant les opérations de connexion/déconnexion de ce dernier (pour la protection de l'intégrité des données),
- adaptation facile aux évolutions d'interface : on peut passer aisément du SCSI parallèle au SCSI Série : seule CCE est alors à changer, ce qui limite le coût de développement de DHD.

## Revendications

1. Dispositif de montage (DHD) d'unité à disques (D) pour système multidisques contenant une pluralité de tiroirs (T) ayant chacun plusieurs emplacements pour unités à disques, comportant :
- un support métallique (SD) possédant des moyens de fixation (EP1 à EP4, V1 à V4) de l'unité à disques (D),
- une ouverture (O) dans ledit support métalliques à l'intérieur de laquelle vient s'insérer un connecteur externe (CN) du dispositif,
- des moyens d'insertion, d'extraction et de verrouillage (PO, R) permettant d'insérer ou d'extraire ce dispositif dans l'emplacement de tiroir choisi, le support comportant des moyens (MPV) pour ventiler l'unité à disques, le support comprenant :
- une première carte de circuit imprimé d'interconnexion (CCE) reliant directement, par l'intermédiaire du connecteur externe (CN), l'unité à disques (D) à son environnement extérieur,
- une seconde carte (CCT), reliée mécaniquement et électriquement à la première carte, supportant des fonctions de conversion de tension continue, les deux cartes étant disposées à l'une des extrémités du dispositif voisine de l'ouverture (o) **caractérisé en ce que** les moyens pour ventiler l'unité à disques (MPV) comprennent :
- des passages d'air (PAS et PAD) pratiqués à l'intérieur du support transversalement à l'unité à disques,
- et un ensemble de trous de ventilation (TV) formé dans une boîte située à l'extrémité du dispositif qui inclut les deux cartes.

2. Dispositif selon la revendication 1 **caractérisé en ce que** il comporte en outre des moyens de visualisation (LED1 à LED3) indiquant l'état du disque quant à sa mise sous tension, son activité et son bon fonctionnement.

3. Dispositif selon la revendication 1 **caractérisé en ce que** il comprend deux convertisseurs de tension continue transformant la tension unique externe (+24 V) d'entrée en deux tensions appropriées aux spécifications des unités à disques.

4. Dispositif selon la revendication 1 **caractérisé en ce que** les deux cartes comprennent des moyens pour connecter et déconnecter sous tension le dispositif de montage sans impact sur le fonctionnement des autres unités à disques du système multidisques.

5. Dispositif selon la revendication 1 **caractérisé en ce que** les deux cartes comprennent des moyens de mise sous tension ou hors tension du dispositif de montage.

## Patentansprüche

1. Montagevorrichtung (DHD) für eine Platteneinheit (D) für ein Mehrplattensystem, das mehrere Einschübe (T) enthält, wovon jeder mehrere Plätze für Platteneinheiten besitzt, mit:
- einem Metallträger (SD), der Mittel (EP1 bis EP4, V1 bis V4) für die Befestigung der Platteneinheit (D) besitzt,
- einer Öffnung (O) im Metallträger, in die ein externer Verbinder (CN) der Vorrichtung eingesteckt wird,
- Mitteln (PO, R) zum Einschieben, Herausziehen und Verriegeln, die das Einschieben oder Herausziehen dieser Vorrichtung in den bzw. aus dem gewählten Einschubplatz ermöglichen,
wobei der Träger Mittel (MPV) zum Belüften der Platteneinheit aufweist und wobei der Träger umfaßt:
eine erste gedruckte Verbindungleiterkarte (CCE), die die Platteneinheit (D) über den externen Verbinder (CN) direkt mit ihrer äußeren Umgebung verbindet,
- eine zweite Karte CCT, die mechanisch und elektrisch mit der ersten Karte verbunden ist und Funktionen zum Umsetzen einer Gleichspannung unterstützt,
wobei die beiden Karten an einem Ende der Vorrichtung in der Nähe der Öffnung (O) angeordnet sind,
**dadurch gekennzeichnet, daß** die Mittel zum Belüften der Platteneinheit (MPV) umfassen:
- Luftkanäle (PAS und PAD), die im Inneren des Trägers quer zur Platteneinheit ausgebildet sind,
- und eine Gesamtheit von Belüftungslöchern (TV), die in einem Kasten gebildet ist, das sich am Ende der Vorrichtung befindet, die die beiden Karten enthält.

2. Vorrichtung nach Anspruch 1, **dadurch gekennzeichnet, daß** sie außerdem Anzeigemittel (LED1 bis LED3) enthält, die den Zustand der Platte in bezug auf die an sie angelegte Spannung, ihre Aktivität und ihre korrekte Funktionsweise angibt.

3. Vorrichtung nach Anspruch 1, **dadurch gekennzeichnet, daß** sie zwei Gleichspannungs-Umsetzer umfaßt, die die einzige externe Eingangsspannung (+24 V) in zwei Spannungen, die für die Spezifikationen der Platteneinheiten geeignet sind, transformieren.

4. Vorrichtung nach Anspruch 1, **dadurch gekennzeichnet, daß** die beiden Karten Mittel zum Anschließen und Trennen unter Spannung der Montagevorrichtung ohne Auswirkung auf die Funktionsweise der anderen Platteneinheiten des Mehrplatten-Systems umfassen.

5. Vorrichtung nach Anspruch 1, **dadurch gekennzeichnet, daß** die beiden Karten Mittel umfassen, die an die Montagevorrichtung eine Spannung anlegen oder die Montagevorrichtung spannungslos machen.

## Claims

1. Device (DHD) for housing a disk unit (D) for a multidisk system containing a plurality of racks (T) each having several locations for disk units, comprising:
- a metal support (SD) having means (EP1 to EP4, V1 to V4) for fixing the disk unit (D),
- an opening (O) in said metal support into which an external connector (CN) for the device is inserted.
- insertion, removal and locking means (PO, R) allowing the device to be inserted into or removed from the chosen rack location,
the support having means (MPV) for ventilating the disk unit, the support comprising:
- a first interconnection printed circuit board (CCE) directly connecting, via the external connector (CN), the disk unit (D) to its external environment,
- a second board (CCT), mechanically and electrically connected to the first board, supporting direct current conversion functions,
the two boards being arranged at one of the ends of the device near the opening (O),
**characterised in that** the means for ventilating the disk unit (MPV) comprise:
- air passages (PAS and PAD) made in the support, transverse to the disk unit,
- and a set of ventilation holes (TV) formed in a case located at the end of the device that includes the two boards.

2. Device according to Claim 1 **characterised in that** it further comprises display means (LED1 to LED3) indicating the state of the disk with respect to whether it is switched on, its activity and its correct functioning.

3. Device according to Claim 1 **characterised in that** it comprises two DC voltage converters transforming the single incoming external voltage (+24 V) into two voltages appropriate to the specifications of the disk units.

4. Device according to Claim 1 **characterised in that** the two boards comprise means for connecting and disconnecting the housing device, while switched on, with no impact on the functioning of the other disk units of the multidisk system.

5. Device according to Claim 1 **characterised in that** the two boards comprise means for switching the housing device on or off.
